# EUROPÄISCHE PATENTANMELDUNG

(11) **EP 1 040 767 A2**
(43) Veröffentlichungstag der Anmeldung: **04.10.2000**
(21) Anmeldenummer: 00105493.1
(22) Anmeldetag: 15.03.2000
(51) Int. Cl.: A23L 2/00, A23L 2/38, A23L 2/54, B01F 3/04

(54) **Verfahren und Vorrichtung zum Herstellen von carbonisierten Getränken**

(30) Priorität: 29.03.1999 DE 19914237
(71) Anmelder: Linde Technische Gase GmbH, 82049 Höllriegelskreuth (DE)
(72) Erfinder: Krupp, Reinhard, Dipl.Volkswirt, 81549 München (DE)
(74) Vertreter: Kasseckert, Rainer

(57) **Zusammenfassung**

Zur Herstellung eines vitalisierend wirkenden Getränks wird vorgeschlagen, ein Gasgemisch in dem Getränk zu lösen, welches 70-99 Vol.-% Kohlendioxid und 1-30 Vol.-% Sauerstoff enthält. Insbesondere bei der Herstellung von carbonisiertem Tafelwasser aus herkömmlichem Leitungswasser erweist sich der Eintrag eines solchen Gasgemisches als einfaches und effizientes Mittel zur Erzielung einer vitalisierenden Wirkung des Trinkwassers.

## Beschreibung

Die Erfindung betrifft ein Verfahren zum Herstellen von carbonisierten Getränken und eine Vorrichtung zur Durchführung des Verfahrens sowie ein Gasgemisch.

Bei der Herstellung von carbonisierten Getränken wird üblicherweise Kohlendioxidgas aus einer Kohlendioxidflasche oder bei industrieller Anwendung in der Getränkeindustrie ggf. auch aus einem Flüssigkohlendioxidtank in dem Getränk zur Lösung gebracht. Beispielsweise wird in der Mineralwasserindustrie Mineralwasser mit Kohlendioxid versetzt, um sprudelndes Mineralwasser zu erhalten. In jüngster Zeit wird auch herkömmliches Trinkwasser aus dem Trinkwasserleitungsnetz mit Kohlendioxid angereichert, um carbonisiertes Tafelwasser herzustellen. Im Haushaltsbereich haben sich Trinkwasseraufbereitungsgeräte etabliert, mit denen herkömmliches dem Wasserhahn entnommenes Trinkwasser in einen Getränkebehälter gefüllt und dort mit Kohlendioxid aus einer Kohlendioxidflasche angereichert wird. Es sind auch bereits Verfahren bekannt, bei denen das dem Leitungsnetz entnommene Trinkwasser unmittelbar vor der Abgabe über den Wasserhahn durch Lösen eines Kohlendioxidgases aus einer Kohlendioxidflasche mit Kohlendioxid angereichert wird (z.B. DE 196 14 754, Stadtwerke Düsseldorf; WO 99/09264, Spiegel).

Insbesondere für medizinische Anwendungen wird verschiedentlich sog. Sauerstoffwasser angeboten, das aus mit Sauerstoff extrem hoch angereichertem Trinkwasser besteht. Dabei wird der Sauerstoff mittels aufwendiger Verfahren bis auf den zehnfachen Wert des üblichen Sauerstoffgehalts von Trinkwasser im Trinkwasser gelöst Während der übliche Sauerstoffgehalt von Trinkwasser ca. 6-7 mg/l beträgt, wird das Sauerstoffwasser mit einem Sauerstoffgehalt von ca. 70 mg/l angeboten (s. Angebot der Fa. Life O₂ International im Internet unter http:\\www.lifeo2.com).

Der vorliegenden Erfindung liegt die Aufgabe zugrunde, eine wirtschaftliche Möglichkeit zur Herstellung eines carbonisierten Getränks mit zusätzlicher vitalisierender Wirkung zu schaffen.

Diese Aufgabe wird verfahrensseitig erfindungsgemäß dadurch gelöst, daß in das Getränk ein Gasgemisch eingetragen wird, das 70-99 Vol.-% Kohlendioxid und 1-30 Vol.-% Sauerstoff enthält.

Durch die Lösung des Gasgemisches in dem Getränk erhält man ein funktionelles Getränk, das zur Steigerung des subjektiven und objektiven Wohlbefindens des Getränkekonsumenten beiträgt. Der Erfindung liegt dabei die überraschende Erkenntnis zugrunde, daß das Wohlbefinden von Menschen nicht nur durch Trinken von mit Sauerstoff extrem hoch angereichertem Sauerstoffwasser sondern auch durch Zusichnehmen eines mit einem Sauerstoff und Kohlendioxid enthaltenden Gasgemisch angereicherten Getränks verbessert werden kann, wenn die angegebenen Anteile der Gasgemischkomponenten beachtet werden. Dies kann z.B. darauf zurückzuführen sein, daß eine zusätzliche vitalisierende Wirkkomponente erzielt wird. Die körperliche Leistungsfähigkeit wird darüber hinaus gesteigert. Besonders bei schwerer körperlicher Arbeit und beim Sport kann das erfindungsgemäß hergestellte Getränk die körperliche Ausdauer verbessern. Die Regeneration nach körperlicher Anstrengung kann außerdem verkürzt werden. Positive Auswirkungen ergeben sich auch in Hinblick auf den Stoffwechsel des Organismus, wobei eine Beschleunigung des Grundumsatzes erzielt wird. Schließlich wird auch die geistige Konzentrationsfähigkeit erhöht.

Durch die Verwendung eines fertigen Gasgemisches mit den angegebenen Gasanteilen wird es möglich, auf einfache und wirtschaftliche Weise vorort ein Getränk mit den angestrebten vitalisierenden Wirkungen herzustellen, ohne daß komplizierte Regelungsmethoden zur Einstellung eines bestimmten Gasmischungsverhältnisses oder technisch aufwendige Gaseintragsverfahren zur Erreichung besonders hoher Sauerstoffgehalte erforderlich sind.

In der einfachsten Ausführungsform der Erfindung wird als Getränk herkömmliches Trinkwasser verwendet. Das Trinkwasser kann beispielsweise aus dem üblichen Trinkwasserleitungsnetz entnommen und mit dem Gasgemisch angereichert werden.

Eine bevorzugte Variante besteht darin, das Gasgemisch in dem dem Trinkwasserleitungsnetz entnommenen Trinkwasser unmittelbar vor der Ausgabe über eine Zapfstelle, z.B. einem Wasserhahn, zu lösen. Dabei kann das Trinkwasser in einem der Zapfstelle vorgeschalteten Druckbehälter mit dem Gasgemisch angereichert werden, oder das Gasgemisch wird in einer der Zapfstelle vorgeschalteten Mischstrecke gelöst. Zum Lösen des Gasgemisches im Trinkwasser wird bevorzugt ein statischer Mischer eingesetzt. Gemäß einer anderen vorteilhaften Methode wird das Gasgemisch über eine Membran oder mittels eines Ventils dem Trinkwasser zugeführt.

Eine weitere Möglichkeit besteht darin, das Trinkwasser dem Trinkwasserleitungsnetz über eine Zapfstelle, z.B. einen Wasserhahn, zu entnehmen und anschließend in einem Getränkebehälter das Gasgemisch im Trinkwasser zu lösen. Hierfür können z.B. herkömmliche Trinkwasseraufbereitungsgeräte eingesetzt werden.

Die Erfindung kann auch in der Mineralwasserindustrie angewandt werden, wobei das Mineralwasser mit dem erfindungsgemäßen Gasgemisch angereichert wird.

Das Trinkwasser bzw. Mineralwasser kann zusätzlich mit Süßstoffen oder Vitaminen versetzt werden. Beispielsweise kann Sirup zugemischt werden.

Die Erfindung ist nicht auf die Herstellung von carbonisiertem Trinkwasser beschränkt, sondern umfaßt auch die Herstellung von anderen Getränken, z.B. Fruchtsäften, Limonaden, etc.

Gemäß einer bevorzugten Variante der Erfindung wird ein Gasgemisch vorgeschlagen, das 90-99 Vol.-% Kohlendioxid und 1-10 Vol.-% Sauerstoff enthält.

Vorteilhafterweise wird das Gasgemisch derart in das Getränk eingetragen, daß ein Getränk entsteht, in dem 8-30 mg/l Sauerstoff und 5-7 mg/l Kohlendioxid gelöst sind. Bei diesen Mengenverhältnissen stellt sich eine besonders vitalisierende Wirkung des Getränks ein, ohne daß der technische Aufwand für die Herstellung des Getränks unverhältnismäßig hoch wird.

Gemäß einer Weiterbildung des Erfindungsgedankens wird ein Gasgemisch in das Getränk eingetragen, das neben Kohlendioxid und Sauerstoff mindestens eine weitere Gaskomponente, insbesondere ein Inertgas, enthält. Als Inertgas kommt besonders Stickstoff in Betracht Es kann aber auch ein Edelgas, z.B. Argon, als weitere Gaskomponente eingesetzt werden. Die weitere Gaskomponente wird vorzugsweise so ausgewählt, daß gewünschte zusätzliche Effekte im Organismus erzielt werden. Beispielsweise können durch das Zumischen von Edelgasen enzymatische Vorgänge beeinflußt werden.

Eine Vorrichtung zur Durchführung des Verfahrens weist einen Carbonisierungsraum zur Aufnahme des Getränks und eine mit dem Carbonisierungsraum in Verbindung stehende Gaseintragseinrichtung auf.

Erfindungsgemäß wird vorrichtungsseitig die gestellte Aufgabe dadurch gelöst, daß die Gaseintragseinrichtung mit einer Quelle für ein 70-99 Vol.-% Kohlendioxid und 1-30 Vol.-% Sauerstoff enthaltendes Gasgemisch in Verbindung steht.

Die Quelle für das Gasgemisch befindet sich zweckmäßigerweise in einem Gasbehälter. Als Gasbehälter wird eine herkömmliche Gasflasche vorgeschlagen, die entweder über eine Verbindungsleitung, z.B. einem Schlauch, mit dem Carbonisierungsraum verbunden ist, oder direkt an den Carbonisierungsraum angeschlossen, z.B. angeschraubt, ist. Eine andere vorteilhafte Variante besteht darin, das Gasgemisch in verflüssigter Form z.B. in einem Flüssiggasbehälter vorzuhalten.

Eine Weiterbildung des Erfindungsgedankens sieht vor, daß die Quelle für das Gasgemisch mit getrennten Gasbehältern in Verbindung steht, wobei mindestens einer Kohlendioxid und ein anderer Sauerstoff enthält. In diesem Fall kann die Quelle für das Gasgemisch beispielsweise als Mischkammer zur Vermischung von Kohlendioxid und Sauerstoff ausgebildet sein. Die Gaskomponenten können auch in verflüssigter Form z.B. in Flüssiggasbehältern vorgehalten werden.

Zur Einstellung eines gewünschten Gasgehalts im Getränk ist zweckmäßigerweise eine Regeleinrichtung vorgesehen, die mit mindestens einer Dosiereinrichtung in mindestens einer Verbindung von der Quelle für das Gasgemisch zum Carbonisierungsraum in Wirkverbindung steht. In der Praxis kann als Dosiereinrichtung ein Ventil oder eine Blende sowie ein Druckminderer in variabler oder fester Einstellung in einer Verbindungsleitung vom Gasbehälter zum Carbonisierungsraum angeordnet sein.

Die Erfindung betrifft ferner ein Gasgemisch zum Carbonisieren von Getränken. Das Gasgemisch enthält erfindungsgemäß 70-99 Vol.-% Kohlendioxid und 1-30 Vol.-% Sauerstoff. Vorzugsweise weist das Gasgemisch einen Anteil von Kohlendioxid von 90-99 Vol.-% und einen Anteil an Sauerstoff von 1-10 Vol.-% auf.

## Patentansprüche

1. Verfahren zum Herstellen von carbonisierten Getränken, **dadurch gekennzeichnet**, daß in das Getränk ein Gasgemisch eingetragen wird, das 70-99 Vol.-% Kohlendioxid und 1-30 Vol.-% Sauerstoff enthält.

2. Verfahren nach Anspruch 1, **dadurch gekennzeichnet**, daß als Getränk Mineralwasser verwendet wird.

3. Verfahren nach Anspruch 1, **dadurch gekennzeichnet**, daß als Getränk Trinkwasser verwendet wird.

4. Verfahren nach einem der Ansprüche 1 bis 3, **dadurch gekennzeichnet**, daß ein Gasgemisch in das Getränk eingetragen wird, das neben Kohlendioxid und Sauerstoff mindestens eine weitere Gaskomponente, insbesondere ein Inertgas, enthält.

5. Verfahren nach Anspruch 4, **dadurch gekennzeichnet**, daß als weitere Gaskomponente Stickstoff eingesetzt wird.

6. Verfahren nach einem der Ansprüche 1 bis 5, **dadurch gekennzeichnet**, daß das Gasgemisch 90-99 Vol.-% Kohlendioxid und 1-10 Vol.-% Sauerstoff enthält.

7. Verfahren nach einem der Ansprüche 1 bis 6, **dadurch gekennzeichnet**, daß das Gasgemisch derart in das Getränk eingetragen wird, daß ein Getränk entsteht, in dem 8-30 mg/l Sauerstoff und 5-7 mg/l Kohlendioxid gelöst sind.

8. Verfahren nach einem der Ansprüche 3 bis 7, **dadurch gekennzeichnet**, daß das Trinkwasser dem Trinkwasserleitungsnetz entnommen und das Gasgemisch vor Ausgabe über eine Zapfstelle im Trinkwasser gelöst wird.

9. Verfahren nach einem der Ansprüche 3 bis 7, **dadurch gekennzeichnet**, daß das Trinkwasser dem Trinkwasserleitungsnetz entnommen und das Gasgemisch nach Ausgabe über eine Zapfstelle in einem Getränkebehälter gelöst wird.

10. Vorrichtung zum Herstellen von carbonisierten Getränken mit einem Carbonisierungsraum zur Aufnahme des Getränks und einer Gaseintragseinrichtung, **dadurch gekennzeichnet**, daß die Gaseintragseinrichtung mit einer Quelle für ein 70-99 Vol.-% Kohlendioxid und 1-30 Vol.-% Sauerstoff enthaltendes Gasgemisch in Verbindung steht.

11. Vorrichtung nach Anspruch 10, **dadurch gekennzeichnet**, daß sich die Quelle für das Gasgemisch in einem Gasbehälter befindet.

12. Vorrichtung nach Anspruch 10, **dadurch gekennzeichnet**, daß die Quelle für das Gasgemisch mit getrennten Gasbehältern in Verbindung steht, wobei mindestens einer Kohlendioxid und mindestens ein anderer Sauerstoff enthält.

13. Vorrichtung nach einem der Ansprüche 10 bis 12, **dadurch gekennzeichnet**, daß eine Regeleinrichtung vorgesehen ist, die mit mindestens einer Dosiereinrichtung in mindestens einer Verbindung von der Quelle für das Gasgemisch zum Carbonisierungsraum in Wirkverbindung steht.

14. Gasgemisch zum Carbonisieren von Getränken, **dadurch gekennzeichnet**, daß das Gasgemisch 70-99 Vol.-% Kohlendioxid und 1-30 Vol.-% Sauerstoff enthält.

15. Gasgemisch nach Anspruch 14, **dadurch gekennzeichnet**, daß das Gasgemisch 90-99 Vol.-% Kohlendioxid und 1-10 Vol.-% Sauerstoff enthält.

16. Gasgemisch nach Anspruch 14 oder 15, **dadurch gekennzeichnet**, daß das Gasgemisch neben Kohlendioxid und Sauerstoff mindestens eine weitere Gaskomponente, insbesondere ein Inertgas, enthält
